# EUROPÄISCHE PATENTANMELDUNG

(11) **EP 2 952 324 A1**
(43) Veröffentlichungstag der Anmeldung: **09.12.2015**
(21) Anmeldenummer: 15170239.6
(22) Anmeldetag: 02.06.2015
(51) Int. Cl.: B29C 45/27

(54) **SPRITZGUSSFORM FÜR SPRITZGUT**

(30) Priorität: 02.06.2014 DE 102014210333
(71) Anmelder: awetis engineering+manufacturing GmbH, 69514 Laudenbach (DE)
(72) Erfinder: PÜHRINGER, Michael, 4131 Obermühl (AT)
(74) Vertreter: Herzog, Fiesser & Partner Patentanwälte PartG mbB

(57) **Zusammenfassung**

Es wird eine Spritzgussform (10) für Spritzgut mit mindestens einer Formplatte (12), die einen Einspritzkanal (46) aufweist, der in einer Einspritzöffnung (48) mündet, und mit einer Einspritzdüse (50), die einen Düsenkörper und eine Düsenspitze (54) aufweist, vorgeschlagen. Zwischen der Formplatte (12) und der Düsenspitze (54) ist eine Kappe (112) angeordnet. Die Kappe (112) ist aus mindestens einem wärmeisolierenden Material hergestellt.

## Beschreibung

### Gebiet der Erfindung

Die Erfindung betrifft eine Spitzgussform für Spritzgut, insbesondere von Kunststoffmaterial, beispielsweise Elastomeren. Derartige Nadelverschlussdüsensysteme mit Einspritzdüsen werden beispielsweise bei Spritzgussformen zur Erzeugung eines Formlings, beispielsweise bei der Herstellung von Kunststoffteilen, verwendet, insbesondere unter Verwendung von Elastomerwerkstoffen. Auch andere Einsatzgebiete sind jedoch denkbar.

### Stand der Technik

Aus dem Stand der Technik ist eine Vielzahl von Nadelverschlussdüsensystemen mit Einspritzdüsen zum Einbringen von Spritzgut in eine Spritzgussform bekannt. Derartige Nadelverschlussdüsensysteme werden in der Regel in einer Spritzgussform verwendet. In der Spritzgussform wird das Spritzgut, beispielsweise ein Kunststoffmaterial, über eine Zuführvorrichtung, beispielsweise über einen Extruder, der Einspritzdüse zugeführt. Die Einspritzdüse weist in der Regel einen Fließkanal im Inneren eines Düsenkörpers auf, der mit der Zuführvorrichtung an einem Ende verbunden ist, so dass das Spritzgut von der Zuführvorrichtung durch den Fließkanal und eine Anspritzbohrung der Einspritzdüse fließt. An dem anderen Ende des Fließkanals ist in der Regel eine Düsenspitze angeordnet, durch welche das Spritzgut aus der Einspritzdüse in einen Einspritzkanal einer Formplatte der Spritzgussform eintritt. In dem Düsenkörper ist üblicherweise eine Nadel angeordnet, die zum wahlweisen Öffnen oder Verschließen einer Austrittsöffnung der Einspritzdüse in einer Längserstreckungsrichtung des Düsenkörpers axial verschiebbar ist.

Die AT 005 750 U1 beschreibt eine Einspritzdüse mit einem Nadelverschluss. Die Nadel ist mittels eines Antriebs verstellbar.

Aus verschiedenen Gründen kann es von Interesse sein, einen Öffnungshub der Nadel einzustellen bzw. zu verändern. So lässt sich über eine Einstellung des Öffnungshubs der Nadel die Menge an Spritzgut, die durch die Düsenspitze und durch die Austrittsöffnung gelangt, einstellen. Die EP 0 818 295 A1 und EP 1 477 292 B1 beschreiben beispielsweise Nadelverschlussdüsensysteme, bei denen der Öffnungshub der Nadel einstellbar ist.

Nachteilig bei den zuletzt genannten Nadelverschlussdüsensystemen ist, dass die Stellvorrichtungen zum Einstellen des Öffnungshubs der Nadel vergleichsweise kompliziert im Aufbau sind oder sich der Öffnungshub nicht exakt einstellen lässt. Des Weiteren ist nachteilig, dass bei den beschriebenen Spritzgussformen die Düsenspitze der Einspritzdüse unmittelbar an der Formplatte anliegt. Da die Formplatte üblicherweise beheizt ist, kann es zu einem ungewollten Vulkanisieren des Spritzguts innerhalb der Düsenspitze kommen. Innerhalb der Düsenspitze vulkanisierendes Spritzgut kann die Düsenspitze verstopfen.

### Aufgabe der Erfindung

Es ist daher Aufgabe der vorliegenden Erfindung, eine Spritzgussform für Spritzgut bereitzustellen, welche die Nachteile bekannter Spritzgussformen zumindest weitgehend vermeidet. Insbesondere soll eine Spritzgussform bereitgestellt werden, bei der die Düsenspitze thermisch von der beheizten Formplatte entkoppelt ist.

### Offenbarung der Erfindung

Diese Aufgabe wird gelöst durch eine Spritzgussform mit den Merkmalen des unabhängigen Patentanspruchs. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nichtausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d. h. auf eine Situation, in welcher A ausschließlich aus B besteht) als auch auf die Situation, in welcher, zusätzlich zu B, ein oder mehrere weitere Elemente in A vorhanden sind, beispielsweise Element C, Elemente C und D oder sogar weitere Elemente.

Eine erfindungsgemäße Spritzgussform für Spritzgut weist mindestens eine Formplatte auf. Die Formplatte weist einen Einspritzkanal auf. Der Einspritzkanal mündet in einer Einspritzöffnung. Die Spritzgussform weist weiterhin eine Einspritzdüse auf. Die Einspritzdüse weist einen Düsenkörper und eine Düsenspitze auf. Zwischen der Formplatte und der Düsenspitze ist eine Kappe angeordnet. Die Kappe ist aus mindestens einem wärmeisolierenden Material hergestellt.

Üblicherweise ist die Formplatte beheizbar. So kann die Formplatte insbesondere indirekt beheizbar sein. Beispielsweise weist die Formplatte Kontakt, insbesondere thermischen Kontakt, zu einer beheizten bzw. beheizbaren Heizplatte der Spritzgussform auf, so dass die Formplatte mittels Wärmeaustauschs mit der Heizplatte beheizt werden kann.

Durch die Anordnung der aus einem wärmeisolierenden Material hergestellten Kappe ist die Düsenspitze thermisch von der beheizten Formplatte entkoppelt. Dies verhindert auch Kaltstellen im Kavitätsbereich der Formplatte. Des Weiteren wird damit gewährleistet, dass der Materialfluss zwischen Düsenspitze und Formplatte abgedichtet wird. Außerdem wird ein Stauchen der Düsenspitze verhindert. Es wird hierdurch auch eine unterschiedliche Wärmeausdehnung ausgeglichen und gewährleistet, dass kein Spritzgut austreten kann.

Ein Spritzgut kann im Rahmen der vorliegenden Erfindung allgemein eine beliebige einspritzbare Masse sein, also eine verformbare Substanz oder ein verformbares Substanzgemisch. Insbesondere kann es sich um eine zähe Masse handeln, mit Viskositäten von etwa 1 bis 100 kPa*s. Insbesondere kann das Spritzgut eine Kunststoffmasse sein oder umfassen und/oder kann eine Masse sein, die eine oder mehrere Substanzen enthält, die sich zu einem oder mehreren Kunststoffen verbinden können und/oder die reagieren können, um einen oder mehrere Kunststoffe zu erzeugen. Insbesondere kann das Spritzgut einen noch nicht vernetzten oder zumindest noch nicht vollständig vernetzten Kunststoff umfassen und/oder eine Kunststoff-Rohmasse. So kann das Spritzgut insbesondere ein noch nicht vulkanisiertes Elastomer oder ein zumindest noch nicht vollständig vulkanisiertes Elastomer umfassen. Bei dem Spritzgut handelt es sich bevorzugt um plastische wärmehärtbare Materialien. Wärmehärtbare Materialien im Sinne der vorliegenden Erfindung sind im wesentlichen Kunststoffe, die sich bei höheren Temperaturen verfestigen, oder vulkanisierende, elastomere Materialien, wie etwa Silikone, Kautschuk oder Gummi. Solche Kunststoffe werden bei der Verarbeitung bei niedriger Temperatur über eine Einspritzdüse in ein Formnest gespritzt, und vulkanisieren dort unter Wärmeeinfluss zum gewünschten Spritzgussteil aus.

Unter einer Kappe ist im Rahmen der vorliegenden Erfindung eine Abdeckung oder Schutzvorrichtung zu verstehen, die geeignet ist, eine Düsenspitze einer Einspritzdüse einer Spritzgussform zu schützen. Der Schutz wirkt dabei insbesondere vor mechanischen und/oder thermischen Beschädigungen.

Unter einem wärmeisolierenden Material ist im Rahmen der vorliegenden Erfindung ein Material zu verstehen, das geeignet ist, die Düsenspitze gegenüber der beheizten Formplatte derart thermisch zu isolieren, dass ein Vulkanisieren des Spritzguts verhindert wird.

Die Kappe kann zumindest teilweise aus einem temperaturdauerbeständigen Material hergestellt sein.

Unter einem temperaturdauerbeständigen Material ist ein Material zu verstehen, das bei einer Temperatur von mindestens 220 °C thermisch beständig ist. Das Material kann beispielsweise Polyetheretherketon oder bevorzugt Tecasint (Sintimid Pur HT) sein. Bevorzugt weist das Material der Kappe zusätzlich eine Beständigkeit gegen abrasive Materialien wie beispielsweise quarzgefüllte Silikonarten auf. Besonders vorteilhaft im Hinblick auf ein Verhindern des Vulkanisierens von Spritzgut in der Düsenspitze sind Materialien für die Kappe, die zudem eine Wärmeleitfähigkeit von nicht mehr als 0,25 W/(K*m) aufweisen.

Die Düsenspitze kann mit dem Düsenkörper formschlüssig verbunden sein.

Unter einer formschlüssigen Verbindung ist im Rahmen der vorliegenden Erfindung eine Verbindung zu verstehen, die durch das Ineinandergreifen von mindestens zwei Verbindungspartnern entsteht. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Bei Betriebsbelastung wirken Druckkräfte normal, das heißt rechtwinklig zu den Flächen der Verbindungspartner. Solche "Sperrungen" kommen in mindestens einer Richtung vor. Ist ein zweites Flächenpaar gegenüber angeordnet, ist auch die Gegenrichtung gesperrt. Im Rahmen der vorliegenden Erfindung verhindert eine formschlüssige Verbindung eines Düsenkörpers und einer Düsenspitze eine translatorische Bewegung der Düsenspitze und des Düsenkörpers zueinander in einer axialen Richtung bezüglich einer Zufuhrkanalachse eines Zufuhrkanals des Düsenkörpers und einer Längsachse der Düsenspitze. Da die Zufuhrkanalachse und die Längsachse in einem verbundenen Zustand der Düsenspitze und des Düsenkörpers zusammenfallen bzw. sich überlappen, wird durch die formschlüssige Verbindung der Düsenspitze und des Düsenkörpers eine Bewegung in einer rein axialen Richtung bezüglich der Zufuhrkanalachse und der Längsachse verhindert.

Insbesondere kann die Düsenspitze mit dem Düsenkörper mittels einer Schraubverbindung verbunden sein. Beispielsweise ist die Düsenspitze in den Düsenkörper eingeschraubt. Dadurch ist die Düsenspitze mit dem Düsenkörper gasdicht verbunden.

Die Düsenspitze kann eine Austrittsöffnung für das Spritzgut aufweisen.

In dem Düsenkörper kann eine Nadel derart angeordnet sein, dass die Nadel zum wahlweisen Öffnen oder Verschließen der Austrittsöffnung in einer Längserstreckungsrichtung des Düsenkörpers axial verschiebbar ist.

Die Nadel kann ein der Formplatte zugewandtes Ende aufweisen, wobei das Ende kegelförmig ausgebildet ist. Das Ende der Nadel kann in einem geschlossenen Zustand der Austrittsöffnung mit der Formplatte formschlüssig abdichten. Die Spritzgussform kann eine Betätigungsvorrichtung zum Verschieben der Nadel, und eine Stellvorrichtung zum Einstellen eines Öffnungshubs der Nadel aufweisen. Der Öffnungshub der Nadel kann mittels einer verschiebbaren, konvexen Anschlagfläche der Stellvorrichtung einstellbar sein. Der Öffnungshub der Nadel kann mittels der verschiebbaren, konvexen Anschlagfläche der Stellvorrichtung stufenlos einstellbar sein. Die Stellvorrichtung kann mindestens eine Kugel aufweisen. Die Kugel kann die verschiebbare, konvexe Anschlagfläche aufweisen. Beispielsweise ist die verschiebbare, konvexe Anschlagfläche eine Oberfläche der Kugel.

Die Stellvorrichtung kann eine Kurvenbahn zum Führen der Kugel aufweisen. Ein erster Abschnitt der Kurvenbahn kann sich abschnittsweise in einer Richtung erstrecken, die im Wesentlichen parallel zu der Längserstreckungsrichtung des Düsenkörpers ist. Der erste Abschnitt der Kurvenbahn kann der Betätigungsvorrichtung zugewandt sein. Ein zweiter Abschnitt der Kurvenbahn kann sich abschnittsweise in einer Richtung erstrecken, die im Wesentlichen senkrecht zu der Längserstreckungsrichtung des Düsenkörpers ist. Der zweite Abschnitt der Kurvenbahn kann der Betätigungsvorrichtung abgewandt sein.

Die Stellvorrichtung kann eine Gewindespindel oder eine elektrische Antriebsvorrichtung aufweisen. Die Betätigungsvorrichtung kann als Pneumatik- oder Hydrauliksystem ausgebildet sein.

Die Nadel kann in einem geteilten Kolben verdrehgesichert angeordnet sein. Die Nadel kann beispielsweise in einer Führungsbuchse angeordnet sein.

Die Düsenspitze kann mehrere zylindrische Flächen zum Führen der Nadel aufweisen. Die Düsenspitze kann eine mit der Austrittsöffnung in Verbindung stehende Durchtrittsbohrung für das Spritzgut aufweisen, in der die Nadel verschiebbar angeordnet ist. Die Düsenspitze kann im Bereich der Durchtrittsbohrung mehrere zylindrisch konisch ausgebildete Einkerbungen aufweisen.

Ein Außenteil der Einspritzdüse kann am vorderen Ende eine zylindrische Fläche aufweisen. Die zylindrische Fläche am vorderen Ende kann zum Positionieren der Düsenspitze in dem Düsenkörper ausgebildet sein.

Zusammenfassend sind im Rahmen der vorliegenden Erfindung folgende Ausführungsformen besonders bevorzugt:
Ausführungsform 1: Spritzgussform für Spritzgut mit mindestens einer Formplatte, die einen Einspritzkanal aufweist, der in einer Einspritzöffnung mündet, und mit einer Einspritzdüse, die einen Düsenkörper und eine Düsenspitze aufweist, wobei zwischen der Formplatte und der Düsenspitze eine Kappe angeordnet ist, wobei die Kappe aus mindestens einem wärmeisolierenden Material hergestellt ist.
Ausführungsform 2: Spritzgussform nach der vorhergehenden Ausführungsform, wobei die Kappe zumindest teilweise aus einem temperaturdauerbeständigen Material hergestellt ist.
Ausführungsform 3: Spritzgussform nach einer der vorhergehenden Ausführungsformen, wobei die Düsenspitze mit dem Düsenkörper formschlüssig verbunden ist. Ausführungsform 4: Spritzgussform nach einer der vorhergehenden Ausführungsformen, wobei die Düsenspitze mit dem Düsenkörper mittels einer Schraubverbindung verbunden ist.
Ausführungsform 5: Spritzgussform nach einer der vorhergehenden Ausführungsformen, wobei die Düsenspitze in den Düsenkörper eingeschraubt ist.
Ausführungsform 6: Spritzgussform nach einer der vorhergehenden Ausführungsformen, wobei die Düsenspitze mit dem Düsenkörper gasdicht verbunden ist.
Ausführungsform 7: Spritzgussform nach einer der vorhergehenden Ausführungsformen, wobei die Düsenspitze eine Austrittsöffnung für das Spritzgut aufweist.
Ausführungsform 8: Spritzgussform nach der vorhergehenden Ausführungsform, wobei eine Nadel in dem Düsenkörper derart angeordnet ist, dass die Nadel zum wahlweisen Öffnen oder Verschließen der Austrittsöffnung in einer Längserstreckungsrichtung des Düsenkörpers axial verschiebbar ist.
Ausführungsform 9: Spritzgussform nach der vorhergehenden Ausführungsform, wobei die Nadel ein der Formplatte zugewandtes Ende aufweist, wobei das Ende kegelförmig ausgebildet ist.
Ausführungsform 10: Spritzgussform nach der vorhergehenden Ausführungsform, wobei das Ende der Nadel in einem geschlossenen Zustand der Austrittsöffnung mit der Formplatte formschlüssig abdichtet.
Ausführungsform 11: Spritzgussform nach einer der drei vorhergehenden Ausführungsformen, wobei die Spritzgussform eine Betätigungsvorrichtung zum Verschieben der Nadel und eine Stellvorrichtung zum Einstellen eines Öffnungshubs der Nadel aufweist, wobei der Öffnungshub der Nadel mittels einer verschiebbaren, konvexen Anschlagfläche der Stellvorrichtung einstellbar ist.
Ausführungsform 12: Spritzgussform nach der vorhergehenden Ausführungsform, wobei der Öffnungshub der Nadel mittels der verschiebbaren, konvexen Anschlagfläche der Stellvorrichtung stufenlos einstellbar ist.
Ausführungsform 13: Spritzgussform nach einer der beiden vorhergehenden Ausführungsformen, wobei die Stellvorrichtung mindestens eine Kugel aufweist, wobei die Kugel die verschiebbare, konvexe Anschlagfläche aufweist.
Ausführungsform 14: Spritzgussform nach der vorhergehenden Ausführungsform, wobei die verschiebbare, konvexe Anschlagfläche eine Oberfläche der Kugel ist.
Ausführungsform 15: Spritzgussform nach einer der beiden vorhergehenden Ausführungsformen, wobei die Stellvorrichtung eine Kurvenbahn zum Führen der Kugel aufweist.
Ausführungsform 16: Spritzgussform nach der vorhergehenden Ausführungsform, wobei sich ein erster Abschnitt der Kurvenbahn abschnittsweise in einer Richtung erstreckt, die im Wesentlichen parallel zu der Längserstreckungsrichtung des Düsenkörpers ist.
Ausführungsform 17: Spritzgussform nach der vorhergehenden Ausführungsform, wobei der erste Abschnitt der Kurvenbahn der Betätigungsvorrichtung zugewandt ist.
Ausführungsform 18: Spritzgussform nach einer der beiden vorhergehenden Ausführungsformen, wobei sich ein zweiter Abschnitt der Kurvenbahn abschnittsweise in einer Richtung erstreckt, die im Wesentlichen senkrecht zu der Längserstreckungsrichtung des Düsenkörpers ist.
Ausführungsform 19: Spritzgussform nach der vorhergehenden Ausführungsform, wobei der zweite Abschnitt der Kurvenbahn der Betätigungsvorrichtung abgewandt ist. Ausführungsform 20: Spritzgussform nach einer der neun vorhergehenden Ausführungsformen, wobei die Stellvorrichtung eine Gewindespindel oder eine elektrische Antriebsvorrichtung aufweist.
Ausführungsform 21: Spritzgussform nach einer der zehn vorhergehenden Ausführungsformen, wobei die Betätigungsvorrichtung als Pneumatik- oder Hydrauliksystem ausgebildet ist.
Ausführungsform 22: Spritzgussform nach einer der Ausführungsformen 8 bis 21, wobei die Nadel in einem geteilten Kolben verdrehgesichert angeordnet ist.
Ausführungsform 23: Spritzgussform nach einer der Ausführungsformen 8 bis 22, wobei die Nadel in einer Führungsbuchse angeordnet ist.
Ausführungsform 24: Spritzgussform nach einer der Ausführungsformen 8 bis 23, wobei die Düsenspitze mehrere zylindrische Flächen zum Führen der Nadel aufweist.
Ausführungsform 25: Spritzgussform nach einer der vorergehenden Ausführungsformen 8 bis 24, wobei die Düsenspitze eine mit der Austrittsöffnung in Verbindung stehende Durchtrittsbohrung für das Spritzgut aufweist, in der die Nadel verschiebbar angeordnet ist, wobei die Düsenspitze im Bereich der Durchtrittsbohrung mehrere zylindrisch konisch ausgebildete Einkerbungen aufweist.
Ausführungsform 26: Spritzgussform nach einer der vorhergehenden Ausführungsformen, wobei der Außenteil der Düsenspitze am vorderen Ende eine zylindrische Fläche aufweist.
Ausführungsform 27: Spritzgussform nach der vorhergehenden Ausführungsform, wobei die zylindrische Fläche am vorderen Ende zum Positionieren der Düsenspitze im Inneren des Düsenkörpers ausgebildet ist.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine erste Längsschnittdarstellung eines Ausführungsbeispiels einer Spritzgussform mit Einspritzdüse;
- Figur 2: eine zweite Längsschnittdarstellung der Spritzgussform mit Einspritzdüse;
- Figur 3: eine vergrößerte Ansicht eines Details C der Figur 2,
- Figur 4: eine Vorderansicht der Düsenspitze der Einspritzdüse und
- Figur 5: eine Querschnittsansicht der Düsenspitze entlang einer Linie A-A der Figur 4.

### Ausführungsbeispiele

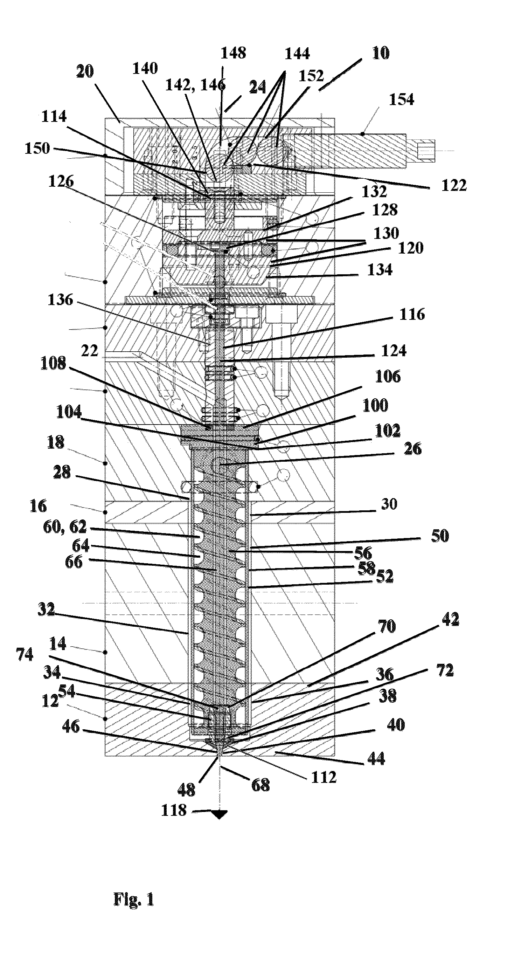

- Figur 1: eine erste Längsschnittdarstellung eines Ausführungsbeispiels einer Spritzgussform mit Einspritzdüse;

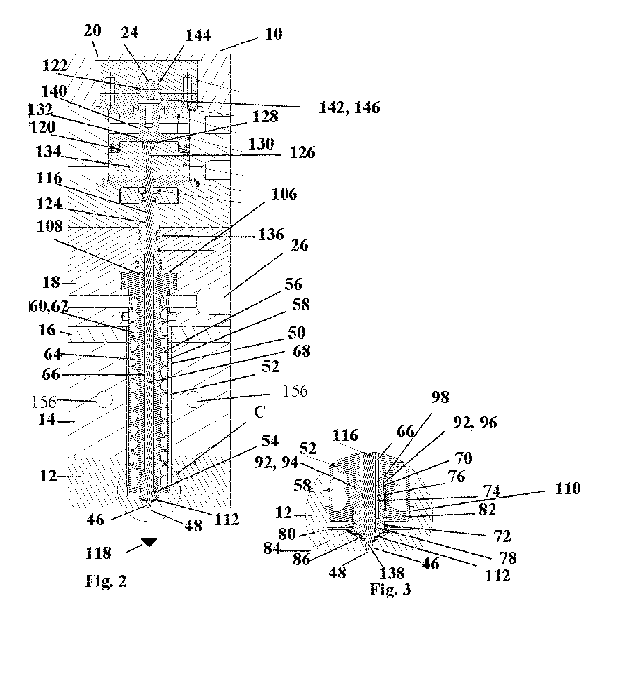

- Figur 2: eine zweite Längsschnittdarstellung der Spritzgussform mit Einspritzdüse;
- Figur 3: eine vergrößerte Ansicht eines Details C der Figur 2,

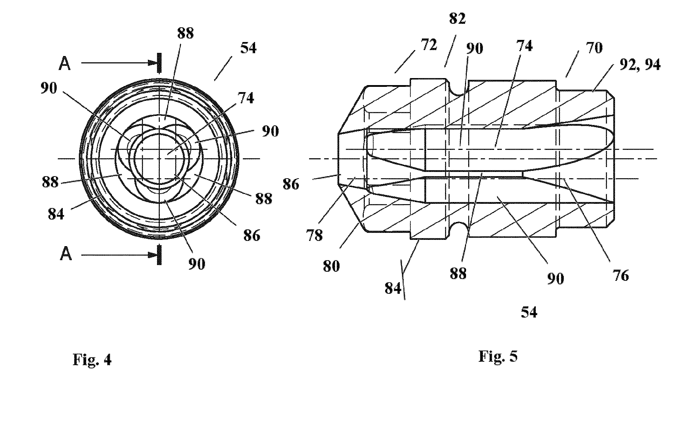

- Figur 4: eine Vorderansicht der Düsenspitze der Einspritzdüse und
- Figur 5: eine Querschnittsansicht der Düsenspitze entlang einer Linie A-A der Figur 4.

Ein Ausführungsbeispiel einer erfindungsgemäßen Spritzgussform 10 für Spritzgut ist in Figur 1 dargestellt. Figur 1 zeigt eine erste Längsschnittdarstellung eines Ausführungsbeispiels der Spritzgussform 10. Als Spritzgut kann beispielsweise Kunststoffinaterial, insbesondere Elastomere, für die Herstellung von Kunststoffformen verwendet werden. Elastomere vernetzen bei Erhitzung einer bestimmten Temperatur, der so genannten Vernetzungstemperatur.

Die Spritzgussform 10 weist eine Formplatte 12, eine Heizplatte 14, eine Isolierplatte 16 und eine Düsenhalteplatte 18 auf. Die Spritzgussform 10 steht mit einer Zufuhrvorrichtung 20 zum Zuführen von Spritzgut über eine Zufuhrbohrung 22 in Verbindung, wie nachstehend ausführlicher beschrieben wird. Die Formplatte 12, die Heizplatte 14, die Isolierplatte 16 und die Düsenhalteplatte 18 sind in dieser Reihenfolge derart aufeinander angeordnet, dass sie eine Längsachse 24 definieren, entlang der sie sich erstrecken.

Figur 2 zeigt eine zweite Längsschnittdarstellung der Spritzgussform 10. Die zweite Längsschnittdarstellung ist im Vergleich zu der ersten Längsschnittdarstellung um 90 ° um die Längsachse 24 gedreht. In der Düsenhalteplatte 18 ist ein Kühlkanal 26 ausgebildet. Der Kühlkanal 26 ist senkrecht zu der Längsachse 24 orientiert und durchdringt die Düsenhalteplatte 18 vollständig. Die Düsenhalteplatte 18 weist in ihrer Mitte eine zylindrische Bohrung 28 auf, die sich in axialer Richtung bezüglich der Längsachse 24 erstreckt. Die Isolierplatte 16 weist in ihrer Mitte eine zylindrische Bohrung 30 auf, die sich in axialer Richtung bezüglich der Längsachse 24 erstreckt. Die Heizplatte 14 weist in ihrer Mitte eine zylindrische Bohrung 32 auf, die sich in axialer Richtung bezüglich der Längsachse 24 erstreckt.

Die Formplatte 12 ist indirekt mittels der Heizplatte 14 beheizt bzw. beheizbar, wie nachstehend ausführlicher beschrieben wird. Die Formplatte 12 weist in ihrer Mitte eine Formplattenbohrung 34 auf, die sich in axialer Richtung bezüglich der Längsachse 24 erstreckt. Die Formplattenbohrung 34 weist einen ersten Abschnitt 36, einen zweiten Abschnitt 38 und einen dritten Abschnitt 40 auf. Der erste Abschnitt 36 befindet sich an einem der Heizplatte 14 zugewandten Hinterende 42 der Formplatte 12. Der dritte Abschnitt 40 befindet sich an einem der Heizplatte 14 abgewandten Vorderende 44 der Formplatte 12. Der zweite Abschnitt 38 befindet sich zwischen dem ersten Abschnitt 36 und dem dritten Abschnitt 40 in axialer Richtung bezüglich der Längsachse 24 gesehen. Der erste Abschnitt 36 der Formplattenbohrung 34 der Formplatte 12, die Bohrung 32 der Heizplatte 14 und die Bohrung 30 der Isolierplatte 16 weisen einen identischen Durchmesser auf. Der Durchmesser der Bohrung 28 der Düsenhalteplatte 18 ist etwas kleiner als der Durchmesser des ersten Abschnitts 36 der Formplattenbohrung 34 der Formplatte 12, der Bohrung 32 der Heizplatte 14 und der Bohrung 30 der Isolierplatte 16. Der zweite Abschnitt 38 der Formplattenbohrung 34 der Formplatte weist einen Durchmesser auf, der kleiner als der Durchmesser des ersten Abschnitts 36 der Formplattenbohrung 34 der Formplatte 12 ist. Der dritte Abschnitt 40 der Formplattenbohrung 34 der Formplatte 12 weist einen Durchmesser auf, der kleiner als der Durchmesser des zweiten Abschnitts 38 der Formplattenbohrung 34 der Formplatte 12 ist. Der zweite Abschnitt 38 ist kegelförmig ausgebildet, so dass sich sein Durchmesser in Richtung zu dem dritten Abschnitt 40 verjüngt. Der dritte Abschnitt 40 ist kegelförmig ausgebildet, so dass sich sein Durchmesser in Richtung zu dem Vorderende 44 verjüngt. Die Formplatte 12 weist weiterhin einen Einspritzkanal 46 auf, der von dem dritten Abschnitt 40 gebildet wird. Der Einspritzkanal 46 mündet in einer Einspritzöffnung 48. Die Einspritzöffnung 48 steht mit einem Formnest in Verbindung, das von der Formplatte 12 und einer weiteren Formplatte begrenzt ist (nicht im Detail gezeigt).

Die Bohrungen 28, 30, 32 und die Formplattenbohrung 34 dienen der Aufnahme einer Einspritzdüse 50 zum Einbringen von Spritzgut in die Spritzgussform 10 wie nachstehend näher beschrieben wird. Der Ausdruck "Einbringen von Spritzgut in die Spritzgussform 10" ist dabei so zu verstehen, dass die Einspritzdüse 50 verwendet wird, um das Spritzgut in das Formnest der Spritzgussform 10 einzubringen. Die Einspritzdüse 50 weist einen Düsenkörper 52 und eine Düsenspitze 54 auf. Der Düsenkörper 52 weist einen Kernteil 56 und eine Hülse 58 auf. Die Hülse 58 ist zylindrisch ausgebildet. Der Kernteil 56 ist im Inneren der Hülse 58 angeordnet. Der Kernteil 56 ist mit der Hülse 58 verbunden. Der Kernteil 56 ist mit der Hülse 58 insbesondere unlösbar verbunden, beispielsweise verschweißt oder verlötet. Der Düsenkörper 52 weist einen Kühlkanal 60 auf. Der Kühlkanal 60 ist in Form einer doppelgängigen Kühlspirale 62 ausgebildet. Der Kühlkanal 60 ist beispielsweise von einer Nut 64 gebildet, die in einer Außenfläche des Kernteils 56 ausgebildet ist. Die Nut 64 ist nach außen von der Hülse 58 verschlossen. Der Düsenkörper 52 weist weiterhin einen Zufuhrkanal 66 zum Zuführen des Spritzguts zu der Düsenspitze 54 auf. Der Zufuhrkanal 66 erstreckt sich entlang einer Zufuhrkanalachse 68. Die Zufuhrkanalachse 68 überlappt mit der Längsachse 24 in einem Zustand, in dem die Einspritzdüse 50 in den Bohrungen 28, 30, 32 und der Formplattenbohrung 34 der Spritzgussform 10 eingesetzt ist.

Figur 3 zeigt eine vergrößerte Ansicht eines Details C der Figur 2. Die Düsenspitze 54 weist einen hinteren Abschnitt 70 und einen vorderen Abschnitt 72 auf. Zum Zuführen des Spritzguts in die Spritzgussform 10 weist die Düsenspitze 54 eine Durchtrittsbohrung 74 auf. Die Durchtrittsbohrung 74 weist mindestens einen ersten Durchmesser 76 und einen zweiten Durchmesser 78 auf. Der erste Durchmesser 76 ist größer als der zweite Durchmesser 78. Der erste Durchmesser 76 ist in dem hinteren Abschnitt 70 angeordnet. Der zweite Durchmesser 78 ist in dem vorderen Abschnitt 72 angeordnet und verjüngt sich kegelförmig in einer Richtung von dem hinteren Abschnitt 70 weg. Die Düsenspitz 54 weist weiterhin ein dem Düsenkörper 52 abgewandtes vorderes Ende 80 auf. Das vordere Ende 80 ist kegelförmig ausgebildet und befindet sich an dem vorderen Abschnitt 72. Das vordere Ende 80 ist somit zum Anliegen an die Formplatte 12 ausgebildet, wie nachstehend ausführlicher beschrieben wird.

Ein Außenteil 82 bzw. Außenumfang der Düsenspitz 54 weist an dem vorderen Ende 80 bzw. genauer vorderen Abschnitt 72 eine zylindrische Fläche 84 auf. Die zylindrische Fläche 84 ist zum Positionieren der Düsenspitze 54 im dem Düsenkörper 52 ausgebildet, wie nachstehend ausführlicher beschrieben wird.

Figur 4 zeigt eine Vorderansicht der Düsenspitze 54. Wie aus Figur 4 zu erkennen ist, weist die Düsenspitze 54 eine Austrittsöffnung 86 auf. Die Austrittsöffnung 86 ist kreisförmig ausgebildet. Die Durchtrittsbohrung 74 steht mit der Austrittsöffnung 86 in Verbindung.

Figur 5 zeigt eine Querschnittsansicht der Düsenspitze 54 entlang der Linie A-A der Figur 4. Die Düsenspitze 54 weist im Bereich der Durchtrittsbohrung 74 mehrere zylindrische Flächen 88 auf. Die Düsenspitze 54 weist weiterhin im Bereich der Durchtrittsbohrung 74 mehrere zylindrisch konisch ausgebildete Einkerbungen 90 auf.

Nun wird zu Figur 3 zurückgekehrt. Figur 3 zeigt insbesondere die Düsenspitze 54 und einen Teil des Düsenkörpers 52. Wie aus Figur 3 gut zu erkennen ist, ist die Düsenspitze 54 mit dem Düsenkörper 52 formschlüssig verbunden. Genauer ist die Düsenspitze 54 mit dem Düsenkörper 52 mittels einer Schraubverbindung 92 verbunden. Beispielsweise weist der hintere Abschnitt 70 ein Außengewinde 94 auf und der Düsenkörper 52 weist ein Innengewinde 96 an einem der Düsenspitze 54 zugewandten Vorderende 98 auf. Die Düsenspitze 54 ist dann in den Düsenkörper 52 eingeschraubt. Entsprechend ist die Schraubverbindung 92 mittels des Außengewindes 94 und des Innengewindes 96 realisiert, die ineinandergreifen. Dadurch ist die Düsenspitze 54 mit dem Düsenkörper 52 gasdicht verbunden. Des Weiteren ist dadurch der hintere Abschnitt 70 der Düsenspitze 54 innerhalb des Düsenkörpers 52 angeordnet, wohingegen der vordere Abschnitt 72 außerhalb des Düsenkörpers 52 angeordnet ist. Die formschlüssige Verbindung der Düsenspitze 54 mit dem Düsenkörper 52 wirkt auf Grund der Schraubverbindung 92 einer relativen Bewegung der Düsenspitze 54 und des Düsenkörpers 52 zueinander in einer ausschließlich axialen Richtung bezüglich der Zufuhrkanalachse 66 des Düsenkörpers 52 entgegen. Der Formschluss lässt lediglich eine Kombination aus einer axialen Bewegung und einer rotatorischen Bewegung der Düsenspitze 54 und des Düsenkörpers 52 zueinander bezüglich der Zufuhrkanalachse 66 des Düsenkörpers 52 zu. Eine derartige Kombination aus einer axialen Bewegung und einer rotatorischen Bewegung der Düsenspitze 54 und des Düsenkörpers 52 zueinander erfolgt insbesondere bei einem Einschrauben der Düsenspitze 54 in den Düsenkörper 52 oder bei einem Herausschrauben der Düsenspitze 54 aus den Düsenkörper 52. Der erfindungsgemäß vorgesehene Formschluss zwischen der Düsenspitze 54 und dem Düsenkörper 52 verhindert somit eine rein translatorische Bewegung der Düsenspitze 54 und des Düsenkörpers 52 zueinander in einer axialen Richtung bezüglich der Zufuhrkanalachse 66 des Düsenkörpers 52.

Die Einspritzdüse 50 ist in den Bohrungen 28, 30, 32 und der Formplattenbohrung 34 der Spritzgussform 10 eingesetzt. Die Einspritzdüse 50 ist so ausgebildet, dass die Einspritzdüse 50 ortsfest in der Düsenhalteplatte 18 der Spritzgussform 10 gehalten ist. So weist, auch wenn dies nicht näher dargestellt ist, beispielsweise zum Verhindern einer Drehung der Einspritzdüse 50 in der Spritzgussform 10 der Düsenkörper 52 außen an einem der Düsenspitze 54 abgewandten hinteren Abschnitt 100 einen Anschlag 102 auf. Der Anschlag 102 ist zum Eingreifen in eine in der Düsenhalteplatte 18 der Spritzgussform 10 ausgebildete Nut 104 ausgebildet. Somit wird eine Verdrehsicherung realisiert, welche ein Verdrehen des Düsenkörpers 52 beim Herausschrauben oder Hineinschrauben der Düsenspitze 54 verhindert und somit die richtige Lage der doppelgängigen Kühlspirale 62 zu dem Kühlkanal 26 in der Düsenhalteplatte 18 gewährleistet. Des Weiteren weist die Einspritzdüse 50 an einem der Düsenspitze 54 abgewandten Hinterende 106 eine Dichtung 108 auf, deren Funktion unten ausführlicher beschrieben ist. Insbesondere ist die Einspritzdüse 50 zwischen der Spritzgussform 10 und der Zufuhrvorrichtung 20 zum Zuführen von Spritzgut zu der Einspritzdüse 50 eingespannt. Das kegelförmige Vorderende 80 der Düsenspitze 54 ist dabei innerhalb des kegelförmigen Abschnitts 40 der Formplattenbohrung 34 angeordnet. Mittels der zylindrischen Fläche 84 ist die Düsenspitze 54 in dem Düsenkörper 52 positioniert.

Die Einspritzdüse 50 ist gegenüber der Formplatte 12 thermisch isoliert. Der Düsenkörper 52 berührt die beheizte Formplatte 12 nicht über seinen gesamten Außenumfang, sondern nur abschnittsweise. Beispielsweise ist eine Berührung zwischen Düsenkörper 52 und Formplatte 12 nur an wulstförmigen Anschlagflächen 110 der Formplatte 12 gegeben. Beispielsweise sind drei Anschlagflächen 110 gleichmäßig beabstandet in einer Umfangsrichtung um den Düsenkörper 52 auf einer dem Düsenkörper 52 zugwandten Innenseite der Bohrung 34 angeordnet, von denen eine bezogen auf die Darstellung der Figur 3 rechts erkennbar ist. Die Anschlagflächen 110 sorgen für einen flächigen Kontakt zwischen der Formplatte 12 und dem Düsenkörper 52 ohne eine vollflächige Berührung über ihre gesamten Oberflächen zu bewirken. Die Düsenspitze 54 ist gegenüber der Formplatte 12 thermisch isoliert bzw. von dieser thermisch entkoppelt. Zu diesem Zweck ist zwischen der Formplatte 12 und der Düsenspitze 54 eine Kappe 112 angeordnet. Die Kappe 112 ist aus mindestens einem wärmeisolierenden Material hergestellt. Genauer ist die Kappe 112 aus einem temperaturdauerbeständigen Material hergestellt. Das Material der Kappe 112 ist insbesondere bei Temperaturen von 220 °C temperaturdauerbeständig. Beispielsweise ist die Kappe 112 aus Polyetheretherketon oder bevorzugt Tecasint (Sintimid Pur HT) hergestellt. Auch Mischungen aus temperaturdauerbeständigen Materialien kommen für die Herstellung der Kappe 112 in Betracht. Bevorzugt ist das Material der Kappe 112 beständig gegenüber abrasiven Materialien und weist eine Wärmeleitfähigkeit von nicht mehr als 0,25 W/(K*m) auf.

Nun wird wieder zu den Figuren 1 und 2 zurückgekehrt. Die oben beschriebene Spritzgussform 10 weist weiterhin ein Nadelverschlussdüsensystem 114 auf. Das Nadelverschlussdüsensystem 114 weist eine Nadel 116 auf. Die Nadel 116 ist derart in dem Düsenkörper 52 angeordnet, dass die Nadel 116 zum wahlweisen Öffnen oder Verschließen der Austrittsöffnung 86 in einer Längserstreckungsrichtung 118 des Düsenkörpers 52 axial verschiebbar ist. Die Längserstreckungsrichtung 118 verläuft parallel zu der Zufuhrkanalachse 68. Das Nadelverschlussdüsensystem 114 weist weiterhin eine Betätigungsvorrichtung 120 zum Verschieben der Nadel 116 und eine Stellvorrichtung 122 zum Einstellen eines Öffnungshubs der Nadel 116 auf. Die Nadel 116 ist ebenfalls in der Durchtrittsbohrung 74 der Düsenspitze 54 verschiebbar angeordnet. Die zylindrischen Flächen 88 dienen zum Führen der Nadel 116. Die zylindrisch konisch ausgebildete Einkerbungen 90 lassen Spritzgut entlang der Nadel 116 zu der Austrittsöffnung 86 durch, so dass nur die Austrittsöffnung 86 von der Nadel 116 verschließbar ist, nicht jedoch die gesamte Durchtrittsbohrung 74.

Die Nadel 116 weist einen Nadelschaft 124 und einen in der Betätigungsvorrichtung 120 gelagerten Abschnitt 126 mit einem Endstück 128 auf. Das Endstück 128 weist einen größeren Durchmesser als der Nadelschaft 124 auf. Die Betätigungsvorrichtung 120 ist als Pneumatik- oder Hydrauliksystem ausgebildet. Die Betätigungsvorrichtung 120 weist einen zweiteiligen Kolben 130 mit einem ersten Kolbenteil 132 und einem zweiten Kolbenteil 134 auf. Der Kolben 130 ist verdrehgesichert in der Spritzgußform 10 angeordnet. Das Endstück 128 der Nadel 116 ist zwischen dem ersten Kolbenteil 132 und dem zweiten Kolbenteil 134 eingeklemmt. Die Nadel 116 ist in dem geteilten Kolben 130 verdrehgesichert angeordnet. Beispielsweise ist die Nadel 116 in einer Führungsbuchse 136 angeordnet. Die an dem Hinterende 106 der Düsenspitze 50 angeordnete Dichtung 108 dichtet den Zufuhrkanal 66 gegenüber der Führungsbuchse 136 ab. Die Nadel 116 weist weiterhin ein der Formplatte 12 zugewandtes Ende 138 auf. Das Ende 138 ist kegelförmig ausgebildet. In einem geschlossenen Zustand der Austrittsöffnung 86 dichtet das kegelförmige Ende 138 mit der Formplatte 12 formschlüssig ab.

Der erste Kolbenteil 132 des Kolbens 130 weist einen Kolbenstempel 140 auf, welcher aus der Betätigungsvorrichtung 120 herausragt. Ein maximaler Weg des Kolbenstempels 140 aus der Betätigungsvorrichtung 120 ist von der Stellvorrichtung 122 bestimmbar, wie nachstehend ausführlicher beschrieben wird. Der maximale Weg des Kolbenstempels 140 aus der Betätigungsvorrichtung 120 bestimmt den Öffnungshub der Nadel 116.

Der Öffnungshub der Nadel 116 ist mittels einer verschiebbaren, konvexen Anschlagfläche 142 der Stellvorrichtung 122 einstellbar. Der Öffnungshub ist insbesondere stufenlos einstellbar. So weist die Stellvorrichtung 122 mindestens eine Kugel 144 auf, wobei die Kugel die verschiebbare, konvexe Anschlagfläche 142 aufweist. Die verschiebbare, konvexe Anschlagfläche 142 ist beispielsweise eine Oberfläche 142 der Kugel 144. Bei der gezeigten Ausführungsform weist die Stellvorrichtung 122 mehrere Kugeln 144 auf, wobei die dem Kolbenstempel 140 zugewandte Kugel 144 die Anschlagfläche 142 aufweist und mit dieser den Kolbenstempel 140 berührt.

Zum Führen der Kugel 144 weist die Stellvorrichtung 122 weiterhin eine Kurvenbahn 148 auf. Ein erster Abschnitt 150 der Kurvenbahn 148 erstreckt sich abschnittsweise in einer Richtung, die im Wesentlichen parallel zu der Längserstreckungsrichtung 118 des Düsenkörpers 52 ist. Der erste Abschnitt 150 der Kurvenbahn 148 ist dabei der Betätigungsvorrichtung 120 zugewandt. Ein zweiter Abschnitt 152 der Kurvenbahn 148 erstreckt sich abschnittsweise in einer Richtung, die im Wesentlichen senkrecht zu der Längserstreckungsrichtung 118 des Düsenkörpers 52 ist. Der zweite Abschnitt 152 der Kurvenbahn 148 ist dabei der Betätigungsvorrichtung 120 abgewandt. Zum Verschieben der mindestens einen Kugel 144 in der Kurvenbahn 148 weist die Stellvorrichtung 122 weiterhin eine Gewindespindel 154 auf. Alternativ kann die Stellvorrichtung 122 zum Verschieben der mindestens einen Kugel 144 in der Kurvenbahn 148 eine elektrische Antriebsvorrichtung aufweisen. Eine solche elektrische Antriebsvorrichtung kann als Rotations- oder Linearantrieb ausgeführt sein.

Nachstehend wird die Betriebsweise der Spritzgußform 10 beschrieben. Mittels der Zufuhrvorrichtung 20 wird Spritzgut aus der Zufuhrbohrung 22 in den Zufuhrkanal 66 in dem Düsenkörper 52 eingebracht. Das Spritzgut fließt aus dem Zufuhrkanal 66 in die Durchtrittsbohrung 74 der Düsenspitze 54. Die Nadel 116 ist axial bezüglich der Zufuhrkanalachse 68 verschiebbar. Die Düsenspitze 54 ist so ausgebildet, dass die Austrittsöffnung 86 mittels der Nadel 116 wahlweise verschließbar oder freigebbar ist. Insbesondere kann die Austrittsöffnung 86 durch eine axiale Verschiebung der Nadel 116 in Richtung zu der Düsenspitze 54 verschlossen werden und durch eine axiale Verschiebung der Nadel 116 in Richtung von der Düsenspitze 54 weg freigegeben werden. Dies ermöglicht eine Unterbrechung des Förderstroms des Spritzguts. Dies ist beispielsweise von Interesse, falls die durch Spritzguß herzustellenden Bauteile nacheinander hergestellt werden sollen.

Der Öffnungshub der in Längsrichtung verschiebbaren Nadel 116 wird durch den geteilten und lagesicherten bzw. verdrehgesicherten Kolben 130 in axialer Richtung getätigt. Mit anderen Worten wird durch eine axiale Bewegung die Nadel 116 axial verschoben, da das Endstück 128 zwischen dem ersten Kolbenteil 132 und dem zweiten Kolbenteil 134 eingeklemmt ist. Die Stellvorrichtung 122 stellt dabei den Öffnungshub ein. So wird der Öffnungshub bei einer Bewegung der mindestens einen Kugel 144 in der Kurvenbahn 148 zu dem Kolbenstempel 140 hin verkleinert und bei einer Bewegung der mindestens einen Kugel 144 in der Kurvenbahn 148 von dem Kolbenstempel 140 weg vergrößert. Des Weiteren weisen die Nadel 116 und der Kolben 130 wie oben beschrieben eine Verdrehsicherung auf, so dass die Nadel 116 verdrehgesichert im System positioniert ist, welches ermöglicht die Nadel 116 im vorderen Bereich, der Kontur des Formplatte 12 anzugleichen, wie beispielsweise einen Anspritzpunkt auf einer Freiformfläche. Die Hubbewegung kann als Pneumatik- oder Hydrauliksystem ausgeführt sein.

Aus der Durchtrittsbohrung 74 gelangt das Spritzgut in den Einspritzkanal 46 der Formplatte 12. Die Formplatte 12 wird indirekt mittels der Heizplatte 14 beheizt. So berührt die Formplatte 12 die Heizplatte 14 und hat somit zu dieser thermischen Kontakt. Die Heizplatte 14 weist Bohrungen 156 (Figur 2) auf, die sich senkrecht zu der Längsachse 24 erstrecken. In diese Bohrungen 156 werden Heizstäbe einer nicht näher gezeigten Heizvorrichtung zum Beheizen der Heizplatte 14 eingesteckt, so dass die Heizplatte 14 beheizt wird. Die Heizvorrichtung kann Teil der Spritzgussform 10 oder ein separates Bauteil sein. Aufgrund des thermischen Kontakts der Heizplatte 14 und der Formplatte 12 wird die Formplatte 12 indirekt über einen Wärmestrom von der Heizplatte 14 zu der Formplatte 12 ebenfalls beheizt. Der Einspritzkanal 46 mündet in der Einspritzöffnung 48. Die Einspritzöffnung 48 steht mit einem Formnest in Verbindung, das von der Formplatte 12 und einer weiteren Formplatte begrenzt ist (nicht im Detail gezeigt). In dieses Formnest gelangt das Spritzgut über den Einspritzkanal 46 und die Einspritzöffnung 48. Das Formnest gibt dabei die Form des durch Spritzguß herzustellenden Bauteils vor. Während dieses Herstellungsprozesses strömt eine Kühlflüssigkeit durch die Kühlkanäle 26, 60 und hält so die Einspritzdüse 50 auf einer vergleichsweisen niedrigen Temperatur. Die Temperatur ist so niedrig, dass das Spritzgut nicht im Inneren der Einspritzdüse 50 ausvulkanisiert und diese so verstopft. Da sich die Einspritzdüse 50 von der kalten Düsenhalteplatte 18 über die Isolierplatte 16 und durch die Heizplatte 14 und bis in die heiße Formplatte 12 hinein erstreckt, sind Maßnahmen getroffen, um die Temperatur der Einspritzdüse 50 niedrig zu halten. Ein Teil dieser Maßnahmen ist das Durchleiten von Kühlflüssigkeit durch die Kühlkanäle 26, 60. Der Kühlkanal 60 erstreckt sich jedoch nicht bis zu der Düsenspitz 54. Um zu verhindern, dass das Spritzgut im der Durchtrittsbohrung 74 der Düsenspitze 54 ausvulkanisiert, ist wie oben beschrieben die Einspritzdüse 50 auch im Bereich der Düsenspitze 54 gegenüber dem heißen Bereich der Spritzgußform 10 mittels der Kappe 112 thermisch isoliert.

### Bezugszeichenliste

- 10: Spritzgussform
- 12: Formplatte
- 14: Heizplatte
- 16: Isolierplatte
- 18: Düsenhalteplatte
- 20: Zufuhrvorrichtung
- 22: Zufuhrbohrung
- 24: Längsachse
- 26: Kühlkanal
- 28: Bohrung
- 30: Bohrung
- 32: Bohrung
- 34: Formplattenbohrung
- 36: erster Abschnitt
- 38: zweiter Abschnitt
- 40: dritter Abschnitt
- 42: Hinterende
- 44: Vorderende
- 46: Einspritzkanal
- 48: Einspritzöffnung
- 50: Einspritzdüse
- 52: Düsenkörper
- 54: Düsenspitze
- 56: Kernteil
- 58: Hülse
- 60: Kühlkanal
- 62: Kühlspirale
- 64: Nut
- 66: Zufuhrkanal
- 68: Zufuhrkanalachse
- 70: hinterer Abschnitt
- 72: vorderer Abschnitt
- 74: Durchtrittsbohrung
- 76: erster Durchmesser
- 78: zweiter Durchmesser
- 80: Vorderes Ende
- 82: Außenteil
- 84: zylindrische Fläche
- 86: Austrittsöffnung
- 88: zylindrische Fläche
- 90: Einkerbungen
- 92: Schraubverbindung
- 94: Außengewinde
- 96: Innengewinde
- 98: Vorderende
- 100: hinterer Abschnitt
- 102: Anschlag
- 104: Nut
- 106: Hinterende
- 108: Dichtung
- 110: Anschlagfläche
- 112: Kappe
- 114: Nadelverschlussdüsensystem
- 116: Nadel
- 118: Längserstreckungsrichtung
- 120: Betätigungsvorrichtung
- 122: Stellvorrichtung
- 124: Nadelschaft
- 126: Abschnitt
- 128: Endstück
- 130: Kolben
- 132: Erster Kolbenteil
- 134: Zweiter Kolbenteil
- 136: Führungsbuchse
- 138: Ende
- 140: Kolbenstempel
- 142: Anschlagfläche
- 144: Kugel
- 146: Oberfläche
- 148: Kurvenbahn
- 150: Erster Abschnitt
- 152: Zweiter Abschnitt
- 154: Gewindespindel
- 156: Bohrung

## Patentansprüche

1. Spritzgussform (10) für Spritzgut mit mindestens einer Formplatte (12), die einen Einspritzkanal (46) aufweist, der in einer Einspritzöffnung (48) mündet, und mit einer Einspritzdüse (50), die einen Düsenkörper (52) und eine Düsenspitze (54) aufweist, wobei zwischen der Formplatte (12) und der Düsenspitze (54) eine Kappe (112) angeordnet ist, wobei die Kappe (112) aus mindestens einem wärmeisolierenden Material hergestellt ist.

2. Spritzgussform (10) nach dem vorhergehenden Anspruch, wobei die Kappe (112) zumindest teilweise aus einem temperaturdauerbeständigen Material hergestellt ist.

3. Spritzgussform (10) nach einem der vorhergehenden Ansprüche, wobei die Düsenspitze (54) mit dem Düsenkörper (52) formschlüssig verbunden ist.

4. Spritzgussform (10) nach einem der vorhergehenden Ansprüche, wobei die Düsenspitze (54) mit dem Düsenkörper (52) mittels einer Schraubverbindung (92) verbunden ist.

5. Spritzgussform (10) nach einem der vorhergehenden Ansprüche, wobei die Düsenspitze (54) in den Düsenkörper (52) eingeschraubt ist.

6. Spritzgussform (10) nach einem der vorhergehenden Ansprüche, wobei die Düsenspitze (54) mit dem Düsenkörper (52) gasdicht verbunden ist.

7. Spritzgussform (10) nach einem der vorhergehenden Ansprüche, wobei die Düsenspitze (54) eine Austrittsöffnung (86) für das Spritzgut aufweist.

8. Spritzgussform (10) nach dem vorhergehenden Anspruch, wobei eine Nadel (116) in dem Düsenkörper (52) derart angeordnet ist, dass die Nadel (116) zum wahlweisen Öffnen oder Verschließen der Austrittsöffnung (86) in einer Längserstreckungsrichtung (118) des Düsenkörpers (52) axial verschiebbar ist.

9. Spritzgussform (10) nach dem vorhergehenden Anspruch, wobei die Nadel (116) ein der Formplatte (12) zugewandtes Ende (138) aufweist, wobei das Ende (138) kegelförmig ausgebildet ist.

10. Spritzgussform (10) nach dem vorhergehenden Anspruch, wobei das Ende (138) der Nadel (116) in einem geschlossenen Zustand der Austrittsöffnung (86) mit der Formplatte (12) formschlüssig abdichtet.

11. Spritzgussform (10) nach einem der drei vorhergehenden Ansprüche, wobei die Spritzgussform (10) eine Betätigungsvorrichtung (120) zum Verschieben der Nadel (116) und eine Stellvorrichtung (122) zum Einstellen eines Öffnungshubs der Nadel (116) aufweist, wobei der Öffnungshub der Nadel (116) mittels einer verschiebbaren, konvexen Anschlagfläche (142) der Stellvorrichtung (122) einstellbar ist.

12. Spritzgussform (10) nach dem vorhergehenden Anspruch, wobei die Stellvorrichtung (122) mindestens eine Kugel (144) aufweist, wobei die Kugel (144) die verschiebbare, konvexe Anschlagfläche (142) aufweist.

13. Spritzgussform (10) nach einem der beiden vorhergehenden Ansprüche, wobei die Stellvorrichtung (122) eine Kurvenbahn (148) zum Führen der Kugel (144) aufweist.

14. Spritzgussform (10) nach einem der drei vorhergehenden Ansprüche, wobei die Stellvorrichtung (122) eine Gewindespindel (154) oder eine elektrische Antriebsvorrichtung aufweist.

15. Spritzgussform (10) nach einem der vorergehenden Ansprüche 8 bis 14, wobei die Düsenspitze (54) eine mit der Austrittsöffnung (86) in Verbindung stehende Durchtrittsbohrung (74) für das Spritzgut aufweist, in der die Nadel (116) verschiebbar angeordnet ist, wobei die Düsenspitze (54) im Bereich der Durchtrittsbohrung (74) mehrere zylindrisch konisch ausgebildete Einkerbungen (90) aufweist.
